# FASCICULE DE BREVET EUROPEEN

(11) **EP 1 606 608 B1**
(45) Date de publication et mention de la délivrance du brevet: **13.08.2014**
(21) Numéro de dépôt: 04742295.1
(22) Date de dépôt: 19.03.2004
(51) Int. Cl.: G01N 21/00

(54) **DISPOSITIF DE DETECTION DE TROUS DANS DES MATERIAUX DEFILANT EN BANDES CONTINUES**
EINRICHTUNG ZUR LOCHDETEKTION IN KONTINUIERLICH BEWEGENDEN MATERIALBÄNDERN
DEVICE FOR THE DETECTION OF HOLES IN CONTINUOUSLY-ADVANCING BANDS OF MATERIAL

(30) Priorité: 20.03.2003 FR 0303437
(43) Date de publication de la demande: 21.12.2005
(60) Demande divisionnaire: 13161882.9
(73) Titulaire: ARCK SENSOR, 31520 Ramonville Saint Agne (FR)
(72) Inventeur: MOULAS, Benoît, F-31140 Aucamville (FR); GEYRE, Pascal, F-31600 Muret (FR); BROUANT, Marc, F-11410 Marquein (FR)
(74) Mandataire: Cabinet Plasseraud
(86) Numéro de dépôt international: PCT/FR2004/000679
(87) Numéro de publication internationale: WO 2004/086009

(56) Documents cités:
- EP-A- 1 249 530
- US-A- 3 835 332
- US-A- 4 260 899
- US-A- 4 265 545
- US-A- 4 302 105
- US-A- 4 728 800
- US-A1- 2002 148 985

## Description

### DOMINE D'APPLICATION DE L'INVENTION

La présente invention a trait à un dispositif du contrôle afin de déceler la présence de trous dans des matériaux en feuilles selon le préambule de la revendication 1 et plus particulièrement pour vérifier les bobines d'acier défilant en bandes continues et à grandes vitesses. Un exemple d'un tel dispositif est connu du US-A-4 260 899.

### DESCRIPTION DE L'ART ANTÉRIEUR

D'une manière générale, la détection de trous dans des feuilles d'acier d'épaisseur d'environ 0,25 mm défilant en bandes continues à une vitesse de l'ordre de 10 m/s est une opération délicate car la détection doit être précise alors que les trous, fissures ou autres défauts de lumière présentent souvent des diamètres très petits (de l'ordre de quelques dizaines de microns) de sorte que leur discrimination n'est pas toujours évidente à mettre en oeuvre techniquement.

Il existe dans l'art antérieur quelques dispositifs de détection de trous dans les matériaux défilant en bandes continues. De tels dispositifs appelés généralement détecteurs de trous sont constitués classiquement d'un bâti vertical interposé sur le trajet de la bande de matériau qui défile en continu et dans un plan horizontal en traversant ledit bâti via une fente horizontale ménagée dans celui-ci à une hauteur et selon une largeur suffisantes pour autoriser sans obstacle le libre passage pour le défilement de ladite bande à l'intérieur du détecteur, passage transitaire au cours duquel s'opère l'inspection des défauts de la bande. Cette fente horizontale délimite deux châssis supérieur et inférieur ouverts chacun d'une fenêtré en regard l'une de l'autre de part et d'autre de ladite fente. Le premier châssis définit une structure logique d'un premier sous-ensemble optique d'émission, via sa fenêtre ouverte sur la fente, générant une source de lumière en direction de ladite bande défilant au-dessous et le deuxième définit une structure logique d'un deuxième sous-ensemble optique de réception, via sa fenêtre également ouverte sur la fente, pour capter ladite lumière en provenance du premier sous ensemble optique et susceptible de filtrer à travers les trous de la bande de matériau défilant au-dessus. Ainsi, les dispositifs de détection sont interposés sur le trajet de défilement de la bande de matériau avec les deux sous-ensembles optiques disposés de part et d'autre de ladite bande qu'ils emprisonnent à l'intérieur d'une chambre généralement obscure le temps de leur transit, afin d'assurer des lectures optiques continues le long d'une ligne transversale au sens de déplacement de la bande sans pour autant en interrompre le défilement.

La demanderesse a constaté que la détection de trous dans les matériaux en bandes défilant en continu telle que classiquement réalisée par les dispositifs antérieurs, présentait certains inconvénients quant à leur mise en oeuvre et à leur efficacité.

Ainsi, au cours de son défilement à travers l'appareil de détection, la bande de métal peut également évoluer transversalement dans la fente tant par des variations de largeur que par des oscillations auxquelles les sous-ensembles optiques de contrôle doivent impérativement s'adapter. Il est aussi très important d'isoler dans des chambres obscures, l'ensemble de détection optique des lumières parasites à savoir la lumière ambiante et/ou la lumière réfléchie provenant de la source lumineuse du sous-ensemble optique émetteur.

D'une manière généralement connue et très usitée dans le domaine de la métallurgie, le sous-ensemble optique d'émission de lumière met en oeuvre un éclairage en ultraviolet diffusé à partir de lampes fluorescentes (par exemple des tubes néon) et le sous-ensemble optique de réception met en oeuvre des capteurs photoélectriques ultrasensibles appelés photomultiplicateurs. Le traitement de l'information en sortie du sous-ensemble optique de réception fournit alors un signal de sortie amplifié et mis en forme pour être comparé à un seuil de tension de manière à délivrer une information en "tout ou rien" ce qui ne permet à une machine de déroulage de bande de matériau que de repérer la portion de bande de matériau percée de trous donc inutilisable. En outre, et grâce à l'utilisation de filtres optiques adéquats, les capteurs photoélectriques ont une sensibilité centrée vers le bleu et l'ultra-violet permettant ainsi d'utiliser des lampes néon de faible puissance tout en évitant les perturbations liées à l'infrarouge dues aux bandes d'acier évoluant à des températures entre 25 °c et 70°c. Cependant, le choix d'une faible puissance au niveau de l'émission impose au niveau du sous-ensemble optique de réception, des très grands rapports d'amplification dans les photomultiplicateurs avec des gains très importants (qui peuvent atteindre le million) ce qui nécessite de polariser les bornes de ces photomultiplicateurs, avec des tensions élevées de plusieurs centaines à plusieurs milliers de volts. Il en résulte inévitablement des coûts d'entretien et de remplacement assez onéreux (les lampes néon sont très coûteuses) qui font que ces dispositifs de détection fonctionnant en outre en "tout ou rien" ne sont plus adaptés aux besoins exigeants des industriels qui demandent de plus en plus une production de matériaux en bandes avec une discrimination plus contraignante (dimensions de plus en plus petites) et plus paramétrable (formes et quantités) des trous détectés.

### DESCRIPTION DE L'INVENTION

Partant de cet état de fait et d'un cahier des charges préétabli, la demanderesse a donc mené des recherches sur un nouveau concept de détection de trous dans des feuilles de matériau défilant en continu sous forme de bandes et permettant de pallier les inconvénients de l'art antérieur tout en répondant aux besoins des industriels.

Ces recherches ont abouti à la conception originale d'un dispositif de détection particulièrement simple et avantageux offrant une polarisation moins importante du sous-ensemble optique de détection, des faibles coûts d'entretien et de remplacement des composants, des possibilités accrues d'inspection des bandes contrôlées, etc...

Selon l'invention, le dispositif de détection de trous dans des matériaux défilant en bandes continues est du type de celui constitué d'un bâti vertical qui, interposé sur le trajet de la bande de matériau via une fente horizontale délimitant ledit bâti en deux châssis supérieur et inférieur, le châssis supérieur étant destiné à supporter un premier sous-ensemble optique d'émission d'une source de lumière en direction de ladite bande défilant au-dessous via une fenêtre débouchant sur ladite fente et le châssis inférieur étant destiné à supporter un deuxième sous-ensemble optique de réception de ladite lumière en provenance du premier sous-ensemble optique et susceptible de filtrer à travers les trous de la bande de matériau défilant au-dessus, via une deuxième fenêtre ménagée dans le châssis inférieur en regard de la première fenêtre ouverte dans châssis supérieur.

Selon le concept original mis en oeuvre dans la présente invention, le susdit sous-ensemble optique d'émission est constitué par une émission stimulée de rayonnement dite rayonnement laser et le susdit sous-ensemble optique de réception est constitué par des photodiodes sensibles aux faibles flux lumineux émis par le rayonnement laser.

L'avantage d'une réception sous forme de diodes à semi-conducteur qui, de préférence, seront des photodiodes dite à avalanche, est d'avoir une sensibilité aux faibles flux lumineux -et une grande durée de vie. En effet, les photodiodes à avalanche qui ont un gain de 100 ou 200, permettent d'avoir des sensibilités qui permettent de générer un courant de 44 mA pour un flux lumineux reçu de 1 mW. La bande passante de ces composants est ainsi compatible avec l'impulsion lumineuse inférieure à 1 µs qui doit être en général celle détectée par de tels dispositifs de détection. C'est pour répondre aux faibles gains des photodiodes de l'ensemble optique de réception que le sous-ensemble optique d'émission est, selon l'invention, constitué par une émission stimulée de rayonnement dite rayonnement laser qui a pour caractéristique première d'augmenter l'efficacité lumineuse de la source d'émission offrant ainsi, associé aux photodiodes du sous ensemble optique de réception, des résultats très satisfaisants de détection. En effet, il est important de rappeler que quelques milliwatts de rayonnement produit par une diode laser fournit en sortie une source de plusieurs milliers de watts apparents car le faisceau est collimaté en sortie pour ne produire qu'une tâche lumineuse de faible diamètre.

Selon l'invention, le sous-ensemble optique d'émission comprend une rampe de plusieurs diodes laser disposées parallèlement et au-dessus de la susdite fente de passage de la bande de matériau à inspecter de manière à ce que la source lumineuse ainsi formée par cette rampe puisse se répandre sur toute la largeur de la bande de matériau. Cette rampe lumineuse comportera de préférence deux rangées parallèles de diodes disposées régulièrement décalées les unes par rapport aux autres de manière à ce que les faisceaux lumineux des diodes d'une rangée se chevauchent avec ceux de l'autre rangée et évitent la présence d'un éventuel "trou noir".

De plus, considérant que le faisceau lumineux collimaté du rayonnement laser ne produit qu'une tâche lumineuse de faible diamètre, il a été imaginé par la demanderesse d'équiper chacune desdites diodes laser d'une lentille génératrice de ligne qui puisse diverger le faisceau laser et balayer ainsi une plus grande zone utile de détection. Cette lentille génératrice de ligne sera du type de celle offrant une intensité relative constante sur la ligne c'est à dire tant au centre qu'aux extrémités de la ligne.

D'autres avantages et d'autres caractéristiques apparaîtront plus clairement à la lecture de la description ci-dessous qui donne à titre d'exemple non limitatif et en regard des dessins annexés, un mode de réalisation d'un dispositif de détection de trous dans des bandes de matériau défilant en continu.

### BRÈVE DESCRIPTION DES DESSINS

La figure 1 est une vue en perspective d'un dispositif conforme à l'invention.
La figure 2 est une vue en perspective partiellement dépouillée du dispositif de la figure 1.
La figure 3 est une vue de dessus schématique en coupe horizontale de ce dispositif.
La figure 4 est une vue schématique en coupe verticale illustrant le phénomène optique opéré dans ce dispositif.

### DESCRIPTION APPUYÉE SUR LES DESSINS

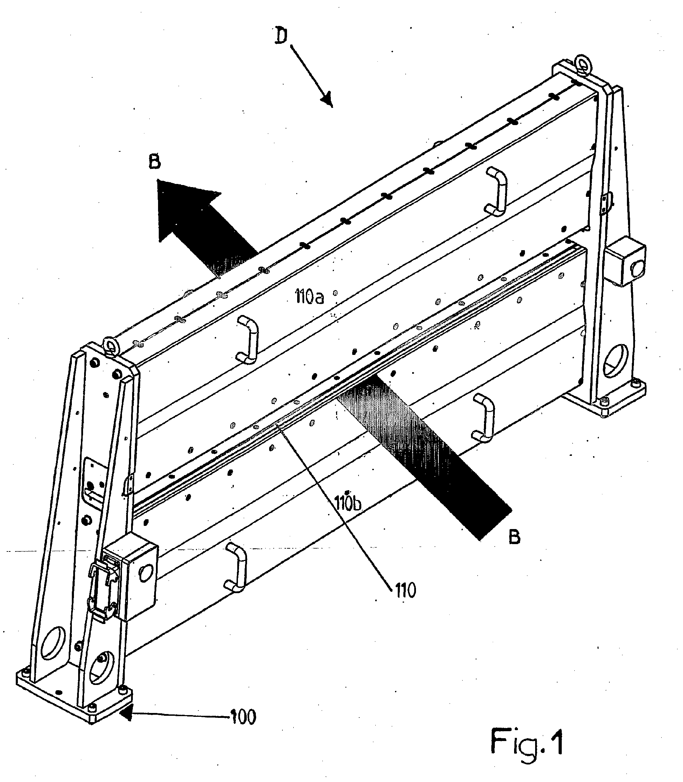

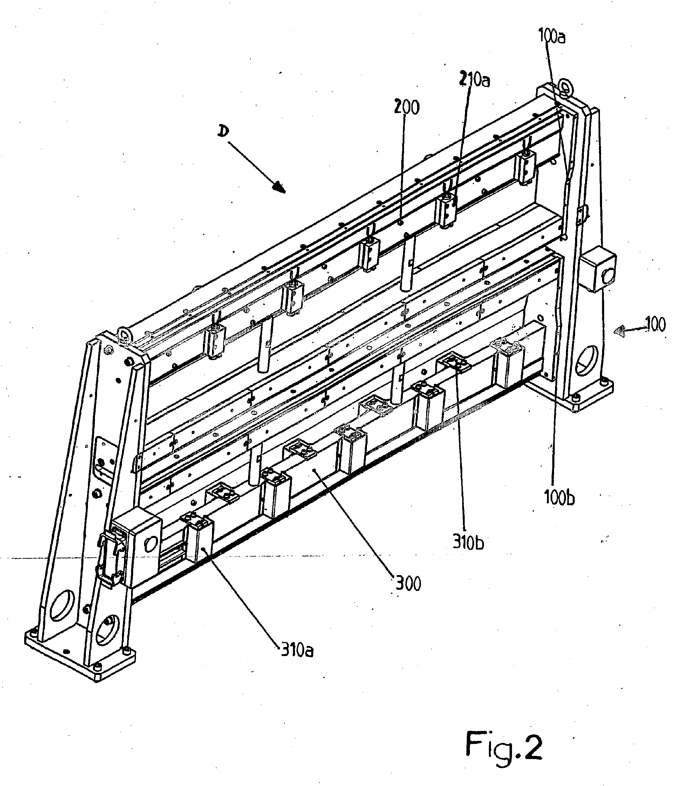

Comme illustrées sur les dessins des figures 1 et 2, le dispositif de détection de trous, référencé D dans son ensemble, est constitué d'un bâti vertical 100 destiné à être interposé sur le trajet d'une bande de matériau défilant en continu (symbolisée par la flèche double B) via une fente horizontale 110 ménagée sensiblement à mi-hauteur du bâti 100. Ce dernier est réalisé à partir de poteaux, longerons et traverses techniquement arrangés entre eux, pour délimiter de part et d'autre de la susdite fente 110, un châssis supérieur 100a et un châssis inférieur 100b habillés tous deux d'éléments de carrosserie amovibles mais débouchant chacun sur la fente 110 via une une fenêtre ouvertes en regard l'une de l'autre.

Comme on peut le voir sur le dessin de la figure 2 représentant le bâti 100 dépouillé d'un côté de ses éléments de carrosserie, le châssis supérieur 100a définit une structure logique d'un premier sous-ensemble optique 200 qui émet une source de lumière à travers la fente 110 et en direction de la bande défilant au-dessous (flèche B) et le châssis inférieur 100b définit une structure logique d'un deuxième sous-ensemble optique 300 dit de réception. Ce deuxième sous-ensemble 300 a pour objet de capter la lumière en provenance du premier sous-ensemble optique 200 et susceptible de filtrer à travers les éventuels trous de la bande de matériau défilant au-dessus et dans la fente 110, afin de fournir en sortie un signal correspondant informant la machine équipée dudit dispositif de détection, de la présence de trous sur telle portion de bande venant d'être inspectée.

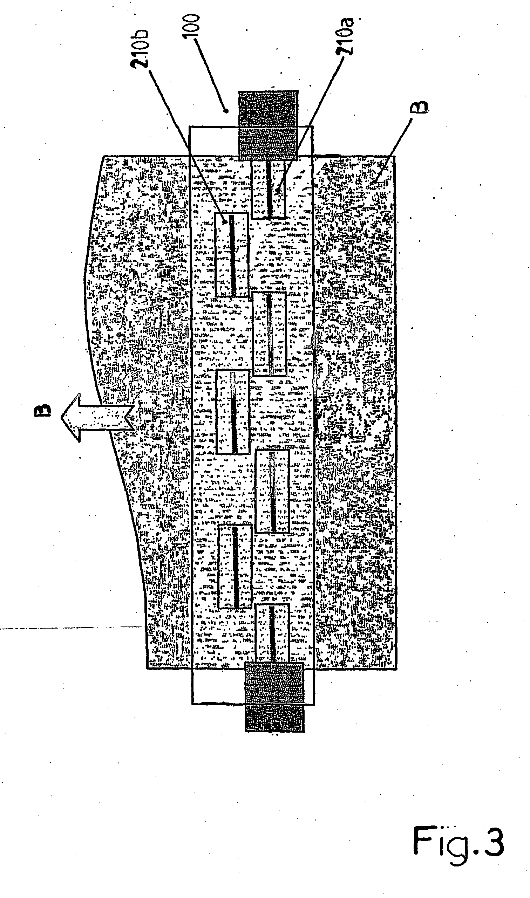

Un des objets principaux de l'invention repose sur la mise en oeuvre originale des deux sous-ensembles optiques 200 et 300. Ainsi, le sous-ensemble optique d'émission 200, illustré plus en détails sur le dessin de la figure 3, est constitué par une émission stimulée de rayonnement dite rayonnement laser obtenue par une rampe de deux rangées de diodes laser 210a et 210b disposées parallèlement et au-dessus de la susdite fente 110 au-dessus de la bande de matériau à inspecter. Une disposition inverse peut bien évidemment être également imaginée de la même manière. Les diodes laser de chaque rangée 210a et 210b de la rampe lumineuse du sous-ensemble optique d'émission 200 sont équipées chacune d'une lentille génératrice de ligne pour faire diverger le faisceau laser à des fins de balayage d'une plus grande zone utile de détection que la tâche lumineuse que l'on trouve en général en sortie de ces diodes. Elles sont de plus disposées régulièrement décalées les unes par rapport aux autres dans le sens de de la fente 110 de manière à ce que les faisceaux lumineux des diodes d'une rangée 210a chevauchent ceux de la rangée de diodes 210b et vice-versa, couvrant ainsi l'entière longueur de la fente et évitant tout risque de "trou noir".

Selon une disposition identique, le deuxième sous-ensemble optique de réception 300 est constitué par une rampe de photodiodes sensibles aux faibles flux lumineux émis par le rayonnement des diodes laser et arrangées également selon deux rangées de photodiodes 310a et 310b disposées parallèlement au-dessous de la susdite fente 110 et de la bande de matériau à inspecter et en face des diodes laser des rangées 210a et 210b, afin de capter les rayonnements laser filtrant à travers les trous de la bande défilant en continu dans le dispositif de détection de l'invention, via la fente 110.

La présence d'une série de diodes sous forme de rampes de deux rangées tant au niveau du sous-ensemble d'émission 200 (rangées 210a et 210b) qu'au niveau du sous-ensemble de réception 300 (rangées 310a et 310b), a pour grand avantage, en dehors de celui des capacités optiques énoncées au début du présent mémoire, de pouvoir adapter facilement les rampes lumineuses des sous-ensembles optiques 200 et 300 à la largeur de la bande qui sera généralement inspectée dans le dispositif de détection de l'invention. Ainsi, par exemple, si la largeur de bande à inspectée recherchée dans le dispositif de détection de l'invention est de l'ordre de 1300 mm et que le champ du faisceau du rayonnement laser de chaque diode du sous-ensemble optique 200 est de 200 mm, les rampes de chaque sous-ensemble optique 200 et 300 pourront être équipées respectivement de sept diodes laser et de sept photodiodes avec un chevauchement de l'ordre de 1 à 10 mm entre les faisceaux lumineux des diodes laser.

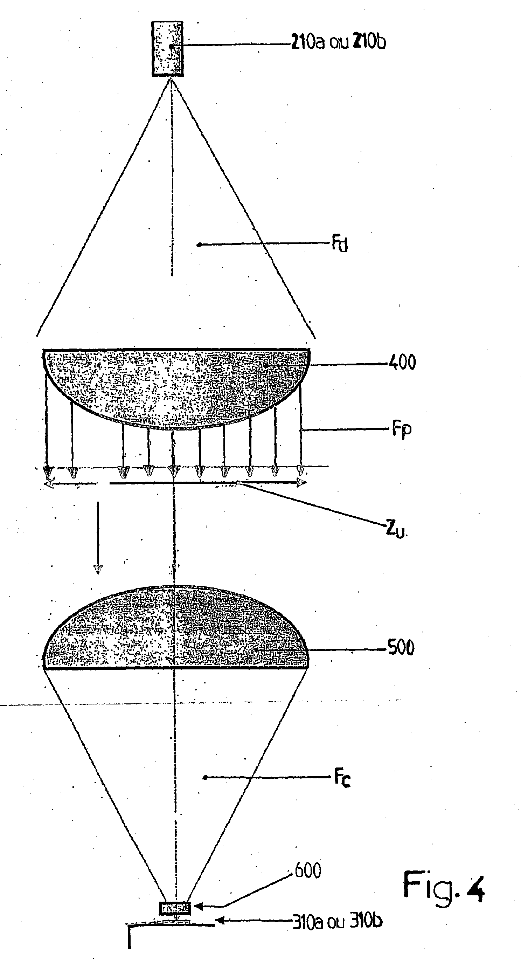

Chacune des diodes laser des rangées 210a ou 210b équipée d'une lentille génératrice de ligne génère donc en sortie, une ligne laser avec un faisceau divergent Fd qui, selon un mode de mise en oeuvre préférentielle de l'invention illustré sur le dessin de la figure 4, sera collimaté en intercalant entre chacune desdites diodes laser 210a ou 210b et la fente 110, au-dessus de la bande de matériau à inspecter, une lentille cylindrique à plan convexe 400 dite divergente intercalée sur ledit faisceau divergent incident Fd pour le faire dévier et le transformer en un faisceau parallèle Fp transversal à la bande à inspecter et perpendiculaire au plan de cette dernière définissant ainsi une zone utile de détection Zu sur une portion de largeur de bande inspectée. Le nombre de diodes 210a et 210b sera donc bien ainsi défini par le rapport des dimensions de la largeur de bande à inspecter sur les dimensions de la zone utile de détection Zu du faisceau parallèle Fp émergeant des lentilles cylindriques à plan convexe 400.

D'une manière identique mais agencée au-dessous de la fente 110 entre la bande à inspecter et les photodiodes 310a et 310b du sous ensemble optique de réception 300, une autre lentille cylindrique à plan convexe 500 dite convergente sera judicieusement intercalée sur ledit faisceau parallèle Fp pour le faire dévier et le transformer en un faisceau convergent Fp vers l'une des photodiodes 310a ou 310b du sous ensemble optique de réception 300, via éventuellement des filtres interférentiels 600 judicieusement aménagés par l'homme de métier.

On comprend que le dispositif de détection qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention telle que revendiquée.

Ainsi, par exemple, la demanderesse a imaginé d'installer les diodes laser 210a, 210b, les lentilles à plan convexe 400, 500 et les photodiodes 310a, 310b dans des colliers ou autres dispositifs de bridage démontables pour rendre plus aisées leurs opérations de pose, de dépose et de calage à des fins de remplacement. De même; il sera possible d'envisager de remplacer chacune des lentilles optiques 400 et 500 par une série de lentilles organisées avec les mêmes objectifs que ceux des lentilles 400 et 500 à savoir de transformer le faisceau divergent Fd en un faisceau parallèle Fp pour la première série de lentilles et de faire dévier ledit faisceau parallèle Fp pour le transformer en un faisceau convergent Fp vers les photodiodes 310a ou 310b pour la deuxième série de lentilles.

## Revendications

1. Dispositif de détection de trous dans des bandes de matériau défilant en continu (flèche B), du type de celui constitué d'un bâti vertical (100) qui, interposé sur le trajet de la bande de matériau via une fente horizontale (110) délimitant ledit bâti (100) en deux châssis supérieur (110a) et inférieur (110b) qui débouchent chacun sur la susdite fente (100) via une fenêtre ouverte en regard l'une de l'autre, le châssis supérieur (110a) étant destiné à supporter un premier sous-ensemble optique d'émission (200) d'une source de lumière en direction de ladite bande défilant au-dessous et le châssis inférieur (110b) étant destiné à supporter un deuxième sous-ensemble optique (300) de réception de ladite lumière en provenance du premier sous-ensemble optique (200) et susceptible de filtrer à travers les trous de la bande de matériau défilant au-dessus, le susdit sous-ensemble optique d'émission (200) est constitué par une émission stimulée de rayonnements dits rayonnements laser, et **caractérisé par le fait que** le susdit sous-ensemble optique de réception (300) est constitué par des photodiodes (310a et 310b) sensibles aux faibles flux lumineux émis par les rayonnements laser, le sous-ensemble optique d'émission (200) comprenant une rampe de deux rangées de diodes laser (210a et 210b) disposées parallèlement et au-dessus de la susdite fente (110) et de la bande de matériau à inspecter, de manière régulièrement décalée les unes par rapport aux autres le long de la susdite fente (110), pour que les faisceaux lumineux des diodes laser d'une rangée (210a ou 210b) se chevauchent avec ceux de l'autre rangée (210b ou 210a) et vice-versa.

2. Dispositif de détection selon la revendication 1, **caractérisé par le fait que** le sous-ensemble optique de réception (300) comprend une rampe de deux rangées de photodiodes (310a et 310b) disposées parallèlement au-dessous de la susdite fente (110) et de la bande de matériau à inspecter et en face des diodes laser (210a et 210b), afin de capter les rayonnements laser filtrant à travers les trous de la bande défilant en continu via la susdite fente (110).

3. Dispositif de détection selon la revendication 1 ou 2, **caractérisé par le fait que** chacune desdites diodes laser (210a et 210b) est équipée d'une lentille génératrice de ligne faisant diverger le faisceau laser à des fins de balayage d'une plus grande zone utile de détection (Zu) que la tâche lumineuse en sortie desdites diodes.

4. Dispositif de détection selon l'une quelconque des revendications 1 à 3, **caractérisé par le fait qu'**une lentille cylindrique à plan convexe (400) dite divergente est intercalée sur le faisceau divergent (Fd) en sortie de chacune des diodes laser (210a ou 210b) pour faire dévier ledit faisceau (Fd) et le transformer en un faisceau parallèle (Fp) transversal à la bande à inspecter et perpendiculaire au plan de cette dernière afin de définir une zone utile de détection (Zu) sur une portion de largeur de bande.

5. Dispositif de détection selon la revendication 4, **caractérisé par le fait qu'**une lentille cylindrique à plan convexe (500) dite convergente est intercalée sur le faisceau parallèle (Fp) au-dessous de la fente (110) entre la bande à inspecter et les photodiodes (310a et 310b) du sous-ensemble optique de réception (300), pour faire dévier ledit faisceau parallèle (Fp) et le transformer en un faisceau convergent vers les photodiodes (310a ou 310b) du sous-ensemble optique de réception (300).

6. Dispositif de détection selon l'ensemble des revendications 1 à 5, **caractérisé par le fait que** le nombre de diodes laser (210a et 210b) du sous-ensemble optique d'émission (200) est le même que le nombre de photodiodes (310a et 310b) du sous-ensemble optique de réception (300).

7. Dispositif de détection selon l'ensemble des revendications 1 à 6, **caractérisé par le fait qu'**il comporte des filtres interférentiels (600) aménagés devant les photodiodes (310a et 310b) du sous-ensemble optique de réception (300).

8. Dispositif de détection selon l'une quelconque des revendications 1 à 7, **caractérisé par le fait que** les susdites diodes laser (210a, 210b) et/ou les susdites lentilles à plan convexe (400, 500) et/ou les susdites photodiodes (310a, 310b) sont montées et calées dans des dispositifs de bridage démontables.

9. Dispositif de détection selon l'une quelconque des revendications précédentes, **caractérisé par le fait qu'**il assure des lectures optiques continues le long d'une ligne transversale au sens de déplacement de la bande.

## Patentansprüche

1. Vorrichtung zur Lochdetektion in kontinuierlich bewegten Materialbändern (Pfeil B) des Typs, welcher von einem vertikalen Rahmen (100) gebildet ist, welcher auf dem Weg des Materialbandes durch einen horizontalen Spalt (110) angeordnet ist, der diesen Rahmen (100) in ein oberes (110a) und ein unteres (110b) Gestell abgrenzt, die beide auf den Spalt (110) über ein Fenster münden, das beiden gegenüber geöffnet ist, wobei das obere Gestell (110a) dazu bestimmt ist, eine erste optische Untereinheit (200) zur Emission einer Lichtquelle in Richtung des Bandes zu halten, das sich darunter bewegt, und wobei das untere Gestell (110b) dazu bestimmt ist, eine zweite optische Untereinheit (300) zum Empfang des Lichts zu halten, das von der ersten optischen Untereinheit (200) stammt und geeignet ist, durch die Löcher des Materialbands zu laufen, das sich darunter bewegt, und wobei die oben genannte optische Emissionsuntereinheit (200) durch eine stimulierte Emission von Strahlung, nämlich Laserstrahlen, gebildet ist,
**dadurch gekennzeichnet ist,dass**
durch die oben genannte optische Empfangsuntereinheit (300) durch Fotodioden (310a und 310b) gebildet ist, die für schwache Lichtströme empfindlich sind, welche durch die Laserstrahlen ausgesendet werden, wobei die optische Emissionsuntereinheit (200) eine Rampe aufweist, die aus zwei Reihen von Laserdioden (210a und 210b) gebildet ist, die parallel und unterhalb des oben genannten Spalts (110) und des zu untersuchenden Materialbands so angeordnet sind, dass die einen in Bezug auf die anderen längs des oben genannten Spalts (110) gleichmäßig versetzt sind, damit die Lichtbündel der Laserdioden der einen Reihe (210a oder 210b) sich mit denen der anderen Reihe (210b oder 210a) überlappen und umgekehrt.

2. Detektionsvorrichtung nach Anspruch 1,
**dadurch gekennzeichnet,**
**dass** die optische Empfangsuntereinheit (300) eine Rampe aus zwei Reihen von Fotodioden (310a und 31 0b) aufweist, die parallel unter dem oben genannten Spalt (110) und des zu untersuchenden Materialbands und gegenüber den Laserdioden (210a und 210b) angeordnet sind, um die Laserstrahlen zum empfangen, die durch die Löcher des Bands laufen, das sich kontinuierlich durch den oben genannten Spalt (110) bewegt.

3. Detektionsvorrichtung nach Anspruch 1 oder 2,
**dadurch gekennzeichnet,**
**dass** jede dieser Laserdioden (210a und 210b) mit einer Linse versehen ist, die eine Linie erzeugt und die das Laserbündel zu Abtastungszwecken zu einer größeren zur Detektion geeigneten Zone (Zu) aufweitet als der Lichtfleck am Ausgang der Dioden.

4. Detektionsvorrichtung nach einem der Ansprüche 1 bis 3,
**dadurch gekennzeichnet,**
**dass** eine derart divergente zylindrische Linse mit konvexer Ebene (400) auf dem divergenten Bündel (Fd) am Ausgang von jeder der Laserdioden (210a oder 210b) zwischengeschaltet ist, um dieses Bündel (Fd) umzulenken und es in ein paralleles Bündel (Fp) quer zum zu untersuchenden Band und senkrecht zur Ebene der letzteren umzuwandeln, um eine zur Detektion geeignete Zone (Zu) auf einem Abschnitt der Bandbreite zu definieren.

5. Detektionsvorrichtung nach Anspruch 4,
**dadurch gekennzeichnet,**
**dass** eine konvergente zylindrische Linse mit konvexer Ebene (500) auf dem parallelen Bündel (Fp) unter dem Spalt (110) zwischen dem zu untersuchenden Band und den Fotodioden (310a und 310b) der optischen Empfangsuntereinheit (300) zwischengeschaltet ist, um das parallele Bündel (Fp) umzuleiten und es in ein konvergentes Bündel in Richtung der Fotodioden (310a oder 310b) der optischen Empfangsuntereinheit (300) umzuwandeln.

6. Detektionsvorrichtung nach einem der Ansprüche 1 bis 5,
**dadurch gekennzeichnet,**
**dass** die Anzahl der Laserdioden (210a und 210b) der optischen Emissionsuntereinheit (200) die gleiche ist wie die Anzahl der Fotodioden (310a und 310b) der optischen Empfangsuntereinheit (300).

7. Detektionsvorrichtung nach einem der Ansprüche 1 bis 6,
**dadurch gekennzeichnet,**
**dass** sie Interferenzfilter (600) aufweist, die vor den Fotodioden (310a und 31 0b) der optischen Empfangsuntereinheit (300) angeordnet sind.

8. Detektionsvorrichtung nach einem der Ansprüche 1 bis 7,
**dadurch gekennzeichnet,**
**dass** die oben genannten Laserdioden (210a, 210b) und/oder die oben genannten Linsen mit konvexer Ebene (400, 500) und/oder die oben genannten Fotodioden (310a, 310b) in abnehmbaren Drosseleinrichtungen angebracht und fixiert sind.

9. Detektionsvorrichtung nach einem der vorstehenden Ansprüche,
**dadurch gekennzeichnet,**
**dass** sie kontinuierliche optische Ablesungen längs einer Linie quer zur Versetzungsrichtung des Bandes gewährleisten.

## Claims

1. A device for detecting holes in continuously-advancing bands of material (arrow B) of the type comprising a vertical structure (100) which, disposed on the path of said band of material via a horizontal slit (110) dividing said frame (100) into two upper (110a) and lower (110b) frames, each opening onto said slit (100) via open windows opposing one another, said upper frame (100a) being designed to support a first optical sub-assembly (200) for emitting a light source in the direction of said band advancing therebelow, and said lower frame (110b) being designed to support a second optical sub-assembly (300) for receiving said light from said first optical sub-assembly (200) and capable of filtering through the holes in said band of material advancing thereabove, **characterised in that** said optical emitting sub-assembly (200) comprises a stimulated emission of radiation referred to as laser radiation, and **characterised in that** said optical receiving sub-assembly (300) is comprised of photodiodes (310a and 310b) sensitive to the low light fluxes emitted by the laser radiation, the optical emitting sub-assembly (200) comprising an array of two rows of laser diodes (210a and 210b) arranged in parallel and above said slit (110) and the band of material to be inspected, in a manner evenly offset with respect to one another along said slit (110), so that the light beams from the laser diodes of one row (210a or 210b) overlap with those of the other row (210b or 210a) and vice-versa.

2. Detection device according to claim 1, **characterised in that** the optical receiving sub-assembly (300) comprises an array of two rows of photodiodes (310a and 310b) arranged in parallel below said slit (110) and the band of material to be inspected and opposite the laser diodes (210a and 210b), in order to capture the laser radiation filtering through the holes in the continuously-advancing band via said slit (110).

3. Detection device according to claim 1 or 2, **characterised in that** each of said laser diodes (210a and 210b) is equipped with a line-generating lens causing the laser beam to diverge so as to scan a larger useful detection zone (Zu) than the light spot output from said diodes.

4. Detection device according to any one of claims 1 to 3, **characterised in that** a divergent plano-convex cylindrical lens (400) is interposed on the divergent beam (Fd) output from each of the laser diodes (210a or 210b) to cause said beam (Fd) to deviate and to transform it into a parallel beam (Fp) transverse to the band to be inspected and perpendicular to the plane thereof so as to define a useful detection zone (Zu) on a portion of the width of the band.

5. Detection device according to claim 4, **characterised in that** a convergent plano-convex cylindrical lens (500) is interposed on the parallel beam (Fp) below the slit (110) between the band to be inspected and the photodiodes (310a and 310b) of the optical receiving sub-assembly (300), to cause said parallel beam (Fp) to deviate and to transform it into a beam converging towards the photodiodes (310a or 310b) of the optical receiving sub-assembly (300).

6. Detection device according to the combination of claims 1 to 5, **characterised in that** the number of laser diodes (210a and 210b) of the optical emitting sub-assembly (200) is the same as the number of photodiodes (310a and 310b) of the optical receiving sub-assembly (300).

7. Detection device according to the combination of claims 1 to 6, **characterised in that** it comprises interference filters (600) disposed in front of the photodiodes (310a and 310b) of the optical receiving sub-assembly (300).

8. Detection device according to any one of claims 1 to 7, **characterised in that** said laser diodes (210a, 210b) and/or said plano-convex lenses (400, 500) and/or said photodiodes (310a, 310b) are mounted and secured in detachable clamping devices.

9. Detection device according to any one of the preceding claims, **characterised in that** it provides continuous optical reading along a line transverse to the direction of movement of the band.
